# EUROPEAN PATENT SPECIFICATION

(11) **EP 3 757 546 B1**
(45) Date of publication and mention of the grant of the patent: **30.11.2022**
(21) Application number: 19183439.9
(22) Date of filing: 28.06.2019
(51) Int. Cl.: G01N 21/47

(54) **A TURBIDITY CALIBRATION STANDARD, A METHOD FOR MANUFACTURING A TURBIDITY CALIBRATION STANDARD AND USE**
TRÜBUNGSKALIBRIERSTANDARD, VERFAHREN ZUR HERSTELLUNG EINES TRÜBUNGSKALIBRIERSTANDARDS UND VERWENDUNG
RÉFÉRENCE D'ÉTALONNAGE DE TURBIDITÉ, PROCÉDÉ DE FABRICATION D'UNE RÉFÉRENCE D'ÉTALONNAGE DE TURBIDITÉ ET SON UTILISATION

(43) Date of publication of application: 30.12.2020
(73) Proprietor: ABB Schweiz AG, 5400 Baden (CH)
(72) Inventor: Carr, Benjamin, Gloucestershire, Bedfordshire GL5 1ST (GB)
(74) Representative: Maiwald GmbH

(56) References cited:
- US-A- 5 059 811
- US-A1- 2010 235 133
- US-A1- 2013 057 860

## Description

### Field of the Invention

The invention relates to a calibration standard, a method for manufacturing a calibration standard, and a use for a turbidity calibration standard.

### Background

Turbidity is a measure of cloudiness, haziness, or amount of scattering of a medium. This may be caused by large numbers of individual particles that stray light within the medium. Turbidity may be measured, e.g., in "Formazine Turbidity Units (FTU)" or in "Nephelometric Turbidity Units (NTU)". This may be performed by a scattering measurement, at a 90° deviation from the direction of the light source. In many cases, scattering measurement is performed using Formazine (in an aqueous solution or suspension) as a standard for turbidity calibrations. However, using Formazine has some drawbacks. Formazine is inherently unstable and may drop out of a solution quickly. The rate, at which the Formazine solution is stirred, may affect the value measured.

Document US 2013 057 860 A1 relates to an apparatus and a method for calibrating a scattered-light measuring device.

Document US 2010 235 133 A1 relates to a standard media suspension body, an optical particulate measurement instrument, and a verification method for an optical particulate measurement instrument.

### Summary

There may be a desire for an improved standard for turbidity calibrations.

This task is solved by the subject-matter of the independent claims. Further embodiments are set forth in the dependent claims and the following description.

According to a first aspect, a turbidity calibration standard is provided, which comprises: a first layer comprising or consisting of a glass-ceramic composite; a second layer comprising or consisting of a first light absorbing medium; and
a third layer comprising or consisting of a second light absorbing medium,
wherein the first layer is arranged between, and in particular immediately adjacent of, the second layer and the third layer, characterized in that the third layer is a material that embeds the first layer.

For scattering measurement, a glass-ceramic composite (GCC) is used. As the GCC, materials of the "LAS system" (a GCC comprising a mix of lithium, silicon, and aluminium oxides with additional components) may be used. As an example, using GCC has the benefit that at least some glass-ceramic composite materials have a very regular structure, resulting from their evenly distributed nano-crystals contained within a residual glass phase. This leads, among other effects, to a very regular and defined scattering behaviour. In a measurement, this may result in essentially the same NTU-value when measured from different angles. In addition, this regularity may provide a scattering value that is repeatable between batches of material. Furthermore, GCC is a solid and is quite stable. This may lead to very small changes of the measurement values during lifetime of the GCC, compared to other solid materials, e.g. plastic.

As a first light absorbing medium, a neutral density filter (ND filter) or another type of a light absorbing medium may be used. Thus, light passes through the first light absorbing medium, thereby contributing to the defined turbidity. An ND filter may have a clearly defined ND value or absorption percentage, which contributes to an advantage like an accurate control of the standard's measurement value(s). Further, this brings the benefit that a chance for readjusting the first layer - e.g. by grinding it - may be given.

As a second light absorbing medium, a neutral density filter with a very high ND value (high absorption percentage), a light absorbent paint, and/or light traps may be used. The second light absorbing medium is darker than the first light absorbing medium. This third layer may absorb any stray light that possibly passes through the turbidity calibration standard; accordingly, whatever is behind the standard has no impact on value. The third layer is implemented as an embedding of the first layer and may be provided as an embedding of the first and the second layers.

The first layer may be arranged immediately adjacent between the second layer and the third layer, i.e. there is no gap - as far as technologically feasible - between these layers.

One example may be to "sandwich together" a variable neutral density filter, a piece of GCC, and high absorption neutral density filter. Accordingly, for instance, the second layer (the first light absorbing medium) may be implemented as a top-layer of the calibration standard and the third layer (the second light absorbing medium) may include a bottom-layer and a side-layer of the calibration standard so as to form a protecting material that embeds and/or covers the other layers.

Hence, the turbidity calibration standard may be manufactured for different types of turbidity measurement apparatuses. Thus, the light path passes through a light absorbing media, followed by passing through a scattering media. The variable neutral density filter allows accurate control over the value of the standard. The GCC provides the scattering, and the high absorption neutral density filter absorbs any stray light. Then, the light may be scattered onto a light detector.

The turbidity calibration standard is a solid. This leads to a far better handling of the turbidity calibration standard than using a solution like Formazine for a defined scattering of the light of a light source. Additionally, this turbidity calibration standard may be used for many types of turbidity measurement apparatuses. Using a regular and long-lasting material like an GCC leads to a very reliable, easy-to-handle turbidity calibration standard. Furthermore, if necessary, its values may even be adapted onsite.

As a light source for the scattering measurement, an IR-LED (infrared light-emitting diode) may be used. The IR-LED may send out light of about 860 nm wavelength.

In the invention. the third layer is a material that embeds at least the first layer. Additionally, in these embodiments, a part of the second layer may be embedded in the third layer. This may be particularly advantageous for robust embodiments, because this embedding may include a shock-protection.

In various embodiments, the glass-ceramic composite is a glass-ceramic (GCC) of the LAS system, particularly is an inorganic, non-porous Lithium Aluminum Silicon oxide glass-ceramic, e.g. ZERODUR^{®} by SCHOTT. ZERODUR^{®} has turned out to have a very even distribution of light-scattering particles. Furthermore, ZERODUR^{®} has a "zero expansion" property against temperature change, leading to a high invariance to temperature change of the calibration standard. The temperature characteristic of the other layers and/or parts of the calibration standard may be adapted accordingly.

In various embodiments, the degree of light absorption of the third layer absorber is higher than the degree of light absorption of the second layer. This results in a clear separation of their functionalities: Whilst the second layer is used for a light entrance and light outlet, the third layer absorber is used for "seal off" the light-behaviour of the calibration standard from its environment. In an embodiment, the second layer may be a polariser, an electrically controlled ND filters, and/or may have other optical properties.

In various embodiments, the second light absorber comprises or consists of a neutral density filter, a light absorbent paint, and/or a light trap. As the neutral density filter, a filter with a very high ND value (high absorption percentage) may be used. As the light absorbent paint, e.g., nano-tubes may be used. These are available, e.g., as brands like Vantablack or Singularity Black.

In an embodiment, the second layer comprises or consists of a transparent material of high hardness, particularly of a Mohs scale hardness of 8 or more, for instance of a Mohs scale hardness of 9 or more. For instance, materials like corundum with defined transparency (i.e. with defined ND value or similar definition) may be used. For readjustment of this layer, a laser may be used.

In various embodiments, the calibration standard further comprises a fourth layer, which is arranged immediately adjacent to the second layer, comprising or consisting of a highly transparent material of high hardness, particularly of a Mohs scale hardness of 8 or more, for instance of a Mohs scale hardness of 9 or more. The fourth layer may be implemented as a layer of material or as a coating. The fourth layer may cover the second layer completely of partly. The fourth layer may be of highly transparent corundum, moissanite, or diamond. This may further enhance the robustness of the calibration standard, e.g. by protecting it from being scratched and/or other effects that may influence calibration standard's optical properties.

In an embodiment, the transparent material of the fourth layer is formed as an optical window in the first layer. This limits both the area of scattering in the first layer and further reduces the stray light.

In an embodiment, the transparent material is a transparent sapphire. This combines high hardness, improved robustness, and reasonable cost.

A further aspect comprises a method for manufacturing a calibration standard of optical materials, comprising the steps of:
- providing a first layer comprising or consisting of a glass-ceramic composite;
- arranging a second layer, comprising or consisting of a first light absorbing medium, immediately adjacent to a first side of the first layer; and
- arranging a third layer, comprising or consisting of a second light absorbing medium, immediately adjacent to a second side of the first layer, characterized in that the third layer is a material that embeds at least the first layer.

In an embodiment, the method further comprises the step of:
- readjusting an optical attribute of the second layer.

This gives a chance of readjusting the optical behaviour of the calibration standard slightly, even after the "main" manufacturing steps.

In an embodiment, the method further comprises the step of:
- arranging a fourth layer comprising or consisting of a transparent material of high hardness immediately adjacent to the second layer.

This additional layer and/or coating improves the robustness of the calibration standard and may further be used and/or foreseen to influence its optical properties, at least slightly, possibly after the "main" manufacturing steps.

In various embodiments, the glass-ceramic composite is a glass-ceramic of the LAS system, particularly is an inorganic, non-porous Lithium Aluminum Silicon oxide glass-ceramic, e.g. ZERODUR^{®} by SCHOTT. This provides a highly regular scattering behaviour, even between batches of material. In addition, ZERODUR^{®} has a "zero expansion" property against temperature change.

In various embodiments, the degree of light absorption of the third layer absorber is higher than the degree of light absorption of the second layer, and/or wherein the second light absorber comprises or consists of a neutral density filter, a light absorbent paint, and/or a light trap.

This solution uses a combination of a scattering material (first layer), optical material for slight changes of the optical behaviour (second layer), and a light absorbing material (third layer) for an improved controlling the value of the calibration standard.

A further aspect comprises a use of a calibration standard of optical materials according as described above and/or below as a standard material for turbidity calibration and/or for absorption calibration.

### Brief description of the Drawings

- Fig. 1: depicts schematically a turbidity calibration standard according to an embodiment;
- Fig. 2: depicts schematically a turbidity calibration standard according to an example not covered by the claims;
- **Fig.** 3: depicts schematically a turbidity calibration standard according to a further example not covered by the claims;
- **Fig. 4**: depicts schematically a method according to an embodiment.

### Detailed Description of Exemplary Embodiments

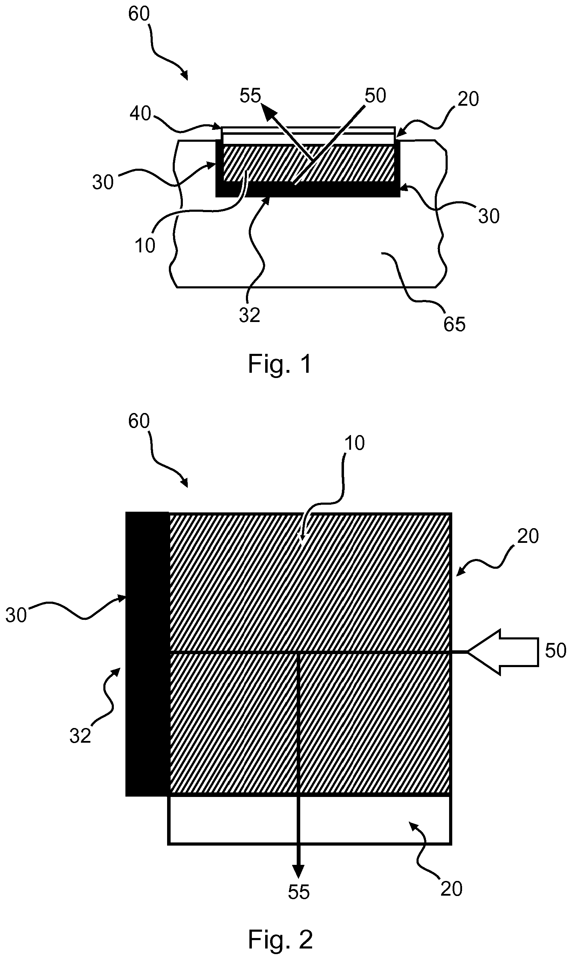

In **Fig. 1****,** a turbidity calibration standard 60 according to embodiment is depicted schematically. This embodiment of the calibration standard 60 is a kind of "sandwich", comprising four layers. A light source 50 is directed in an angle of about 45° to the top layers of the calibration standard 60. The light of the light source 50 passes through a fourth layer 40 and a second layer 20. The fourth layer 40 may be implemented as a transparent sapphire, thus protecting the surface from scratching. The second layer 20 may be implemented as a neutral density filter (ND filter) or another type of a light absorbing medium. After passing the top-layers 40 and 20, the light is scattered in the first layer 10. Then, it passes back, through the top-layers 20 and 40, to light detector 55, which is arranged in a 90° angle from the incoming light beam from light source 50. Light source 50 may be an IR-LED (infrared light-emitting diode), e.g. at a wavelength of around 860 nm. The bottom-layer is a third layer 30, which absorbs the light that hits the third layer 30. Behind the third layer 30, an area of absorbed light 32 is shown. The third layer 30 comprises or consists of a neutral density filter, a light absorbent paint, and/or a light trap. The turbidity calibration standard 60 is embedded in a dark protecting material 65, which protects the calibration standard 60 mechanically and/or otherwise from its environment. The sides of the calibration standard 60 are either of the third layer 30 and encapsulated in a light-proof way in the protecting material 65 (thus building the third layer 30 of the protecting material 65).

**Fig. 2** depicts schematically a turbidity calibration standard 60 according to an example not covered by the claims.

The light of the light source 50 passes through a second layer 20 to a first layer 10. The light is scattered in the first layer 10, and then measured by light detector 55, which is arranged in a 90° angle from the incoming light beam of light source 50. Between the first layer 10 and the light detector 55, a second layer 20 is arranged. On the left side, a third layer 30, which absorbs the light that hits the third layer 30. Behind the third layer 30, an area of absorbed light 32 is shown. The third layer 30 may comprise and/or may be built of the protecting material 65.

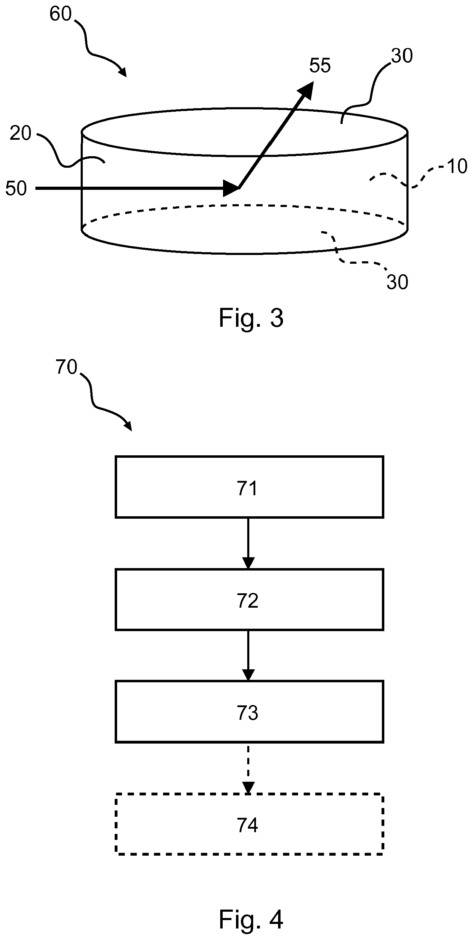

**Fig. 3** depicts schematically a turbidity calibration standard 60 according to a further example not covered by the claims.

The light from light source 50 passes through the side-layer, i.e. through the second layer 20. The light is scattered in the first layer 10 and parts of the light are detected and measured by light detector 55, which is arranged in a 90° angle from the incoming light beam of light source 50. The top-layer and the bottom-layer is a third layer 30, which absorbs the light. The third layer 30 may comprise or consist of a neutral density filter, a light absorbent paint, and/or a light trap.

**Fig. 4** depicts schematically a flow-diagram 70 of a manufacturing method according to an embodiment. In a step 71, a first layer 10 is provided. The first layer 10 comprises or consists of a glass-ceramic composite, e.g. of ZERODUR^{®} by SCHOTT. In a step 72, a second layer 20 is arranged, which comprises or consists of a first light absorbing medium. The second layer 20 is immediately adjacent to a first side of the first layer 10. In a step 72, a third layer 30 is arranged, which comprises or consists of a second light absorbing medium. The third layer 30 is immediately adjacent to a second side of the first layer 10. The degree of light absorption of the third layer 30 absorber is higher than the degree of light absorption of the second layer 20. In an optional step 74, an optical attribute of the second layer 20 is readjusted, e.g. by a grinding tool or by an abrasive laser.

### List of Reference Signs

- 10: first layer
- 20: second layer
- 30: third layer
- 32: light absorbed
- 40: fourth layer
- 50: light source
- 55: light detector
- 60: calibration standard
- 65: protecting material
- 70: flow diagram
- 71 - 74: steps

## Claims

1. A turbidity calibration standard (60), comprising:
a first layer (10) comprising or consisting of a glass-ceramic composite;
a second layer (20) comprising or consisting of a first light absorbing medium; and
a third layer (30) comprising or consisting of a second light absorbing medium,
wherein the first layer (10) is arranged between the second layer (20) and the third layer (30), **characterized in that**
the third layer (30) is a material that embeds at least the first layer (10).

2. The calibration standard (60) of claim 1,
wherein the glass-ceramic composite is a glass-ceramic of a lithium, silicon, and aluminium, LAS, system, particularly is an inorganic, non-porous Lithium Aluminium Silicon oxide glass-ceramic.

3. The calibration standard (60) of any one of the preceding claims,
wherein the degree of light absorption of the third layer (30) absorber is higher than the degree of light absorption of the second layer (20).

4. The calibration standard (60) of any one of the preceding claims,
wherein the second light absorbing medium comprises or consists of a neutral density filter, a light absorbent paint, and/or a light trap.

5. The calibration standard (60) of any one of the preceding claims,
wherein the second layer (20) comprises or consists of a transparent material of high hardness, particularly of a Mohs scale hardness of 8 or more, for instance of a Mohs scale hardness of 9 or more.

6. The calibration standard (60) of any one of the preceding claims, further comprising:
a fourth layer (40) arranged immediately adjacent to the second layer (20),
comprising or consisting of a highly transparent material of high hardness,
particularly of a Mohs scale hardness of 8 or more, for instance of a Mohs scale hardness of 9 or more.

7. The calibration standard (60) of claim 6,
wherein the highly transparent material of the fourth layer (40) is formed as an optical window in the first layer (10).

8. The calibration standard (60) of claim 6 or 7,
wherein the transparent material is a transparent sapphire.

9. A method for manufacturing a calibration standard (60) of optical materials, comprising the steps of:
- providing a first layer (10) comprising or consisting of a glass-ceramic composite;
- arranging a second layer (20), comprising or consisting of a first light absorbing medium, immediately adjacent to a first side of the first layer (10); and
- arranging a third layer (30), comprising or consisting of a second light absorbing medium, immediately adjacent to a second side of the first layer (10),
**characterized in that** the third layer (30) embeds at least the first layer (10)..

10. The method of claim 9, further comprising the step of:
- readjusting an optical attribute of the second layer (20).

11. The method of claim 9 or 10, further comprising the step of:
- arranging a fourth layer (40) comprising or consisting of a transparent material of high hardness immediately adjacent to the second layer (20).

12. The method of any one of claims 9 to 11,
wherein the glass-ceramic composite is a glass-ceramic of a lithium, silicon, and aluminium, LAS, system, particularly is an inorganic, non-porous Lithium Aluminum Silicon oxide glass-ceramic.

13. The method of any one of claims 9 to 12,
wherein the degree of light absorption of the third layer (30) absorber is higher than the degree of light absorption of the second layer (20), and/or
wherein the second light absorber comprises or consists of a neutral density filter, a light absorbent paint, and/or a light trap.

14. Use of a turbidity calibration standard (60) of optical materials according to any one of claims 1 to 8 as a standard material for turbidity calibration and/or for absorption calibration.

## Patentansprüche

1. Ein Trübungs-Kalibrierungsstandard (60), umfassend:
eine erste Schicht (10), die einen Glas-Keramik-Verbundstoff umfasst oder daraus besteht;
eine zweite Schicht (20), die ein erstes lichtabsorbierendes Medium umfasst oder daraus besteht; und
eine dritte Schicht (30), die ein zweites lichtabsorbierendes Medium umfasst oder daraus besteht,
wobei die erste Schicht (10) zwischen der zweiten Schicht (20) und der dritten Schicht (30) angeordnet ist,
**dadurch gekennzeichnet, dass** die dritte Schicht (30) ein Material ist, das zumindest die erste Schicht (10) einbettet.

2. Der Kalibrierungsstandard (60) nach Anspruch 1,
wobei der glaskeramische Verbundwerkstoff eine Glaskeramik aus einem Lithium-, Silizium- und Aluminiumsystem, LAS, ist, insbesondere eine anorganische, nicht poröse Lithium-Aluminium-Siliziumoxid-Glaskeramik.

3. Der Kalibrierungsstandard (60) nach einem der vorhergehenden Ansprüche,
wobei der Grad der Lichtabsorption der dritten Absorberschicht (30) höher ist als der Grad der Lichtabsorption der zweiten Schicht (20).

4. Kalibrierungsstandard (60) nach einem der vorangehenden Ansprüche,
wobei das zweite lichtabsorbierende Medium ein Neutraldichtefilter, eine lichtabsorbierende Farbe und/oder eine Lichtfalle umfasst oder daraus besteht.

5. Der Kalibrierungsstandard (60) nach einem der vorhergehenden Ansprüche, wobei die zweite Schicht (20) ein transparentes Material mit hoher Härte, insbesondere mit einer Mohs'schen Härteskala von 8 oder mehr, z.B. mit einer Mohs'schen Härteskala von 9 oder mehr, umfasst oder daraus besteht.

6. Kalibrierungsstandard (60) nach einem der vorhergehenden Ansprüche, ferner umfassend:
eine vierte Schicht (40), die unmittelbar neben der zweiten Schicht (20) angeordnet ist und ein hochtransparentes Material mit hoher Härte, insbesondere mit einer Härte von 8 oder mehr auf der Mohs-Skala, beispielsweise mit einer Härte von 9 oder mehr auf der Mohs-Skala, umfasst oder daraus besteht.

7. Der Kalibrierungsstandard (60) nach Anspruch 6,
wobei das hochtransparente Material der vierten Schicht (40) als optisches Fenster in der ersten Schicht (10) ausgebildet ist.

8. Der Kalibrierungsstandard (60) nach Anspruch 6 oder 7,
wobei das transparente Material ein transparenter Saphir ist.

9. Verfahren zur Herstellung eines Kalibrierungsstandards (60) aus optischen Materialien, das die folgenden Schritte umfasst:
- Bereitstellen einer ersten Schicht (10), die einen Glas-Keramik-Verbundstoff umfasst oder daraus besteht;
- Anordnen einer zweiten Schicht (20), die ein erstes lichtabsorbierendes Medium umfasst oder daraus besteht, unmittelbar angrenzend an eine erste Seite der ersten Schicht (10); und
- Anordnen einer dritten Schicht (30), die ein zweites lichtabsorbierendes Medium umfasst oder daraus besteht, unmittelbar angrenzend an eine zweite Seite der ersten Schicht (10),
**dadurch gekennzeichnet, dass** die dritte Schicht (30) zumindest die erste Schicht (10) einbettet.

10. Verfahren nach Anspruch 9, ferner umfassend den Schritt::
- Nachjustieren eines optischen Attributs der zweiten Schicht (20).

11. Verfahren nach Anspruch 9 oder 10, das ferner den folgenden Schritt umfasst
- Anordnen einer vierten Schicht (40), die ein transparentes Material mit hoher Härte umfasst oder daraus besteht, unmittelbar neben der zweiten Schicht (20).

12. Verfahren nach einem der Ansprüche 9 bis 11,
wobei der Glas-Keramik-Verbundwerkstoff eine Glas-Keramik aus einem Lithium-, Silizium- und Aluminium-LAS-System ist, insbesondere eine anorganische, nicht-poröse Lithium-Aluminium-Siliziumoxid-Glas-Keramik ist.

13. Verfahren nach einem der Ansprüche 9 bis 12,
wobei der Grad der Lichtabsorption der dritten Absorberschicht (30) höher ist als der Grad der Lichtabsorption der zweiten Schicht (20), und/oder
wobei der zweite Lichtabsorber einen Neutraldichtefilter, eine lichtabsorbierende Farbe und/oder eine Lichtfalle umfasst oder aus einer solchen besteht.

14. Verwendung eines Trübungskalibrierungsstandards (60) aus optischen Materialien nach einem der Ansprüche 1 bis 8 als Standardmaterial zur Trübungskalibrierung und/oder zur Absorptionskalibrierung.

## Revendications

1. Étalon d'étalonnage de turbidité (60), comprenant :
une première couche (10) comprenant ou consistant en un composite verre-céramique ;
une deuxième couche (20) comprenant ou consistant en un premier milieu absorbant la lumière ; et
une troisième couche (30) comprenant ou consistant en un deuxième milieu absorbant la lumière,
dans lequel la première couche (10) est disposée entre la deuxième couche (20) et la troisième couche (30),
**caractérisé en ce que** la troisième couche (30) est un matériau qui encapsule au moins la première couche (10) .

2. Étalon d'étalonnage (60) de la revendication 1,
dans lequel le composite verre-céramique est une vitrocéramique d'un système de lithium, silicium et aluminium, LAS, en particulier est une vitrocéramique inorganique non poreuse d'oxyde de lithium-aluminium-silicium.

3. Étalon d'étalonnage (60) de l'une quelconque des revendications précédentes,
dans lequel le degré d'absorption de lumière de l'absorbeur de la troisième couche (30) est supérieur au degré d'absorption de lumière de la deuxième couche (20) .

4. Étalon d'étalonnage (60) de l'une quelconque des revendications précédentes,
dans lequel le deuxième milieu absorbant la lumière comprend ou consiste en un filtre gris neutre, une peinture absorbant la lumière, et/ou un piège à lumière.

5. Étalon d'étalonnage (60) de l'une quelconque des revendications précédentes,
dans lequel la deuxième couche (20) comprend ou consiste en un matériau transparent de dureté élevée, en particulier d'une dureté sur l'échelle Mohs de 8 ou plus, par exemple d'une dureté sur l'échelle Mohs de 9 ou plus.

6. Étalon d'étalonnage (60) de l'une quelconque des revendications précédentes, comprenant en outre :
une quatrième couche (40) disposée au voisinage immédiat de la deuxième couche (20), comprenant ou consistant en un matériau hautement transparent de dureté élevée, en particulier d'une dureté sur l'échelle Mohs de 8 ou plus, par exemple d'une dureté sur l'échelle Mohs de 9 ou plus.

7. Étalon d'étalonnage (60) de la revendication 6,
dans lequel le matériau hautement transparent de la quatrième couche (40) est formé comme une fenêtre optique dans la première couche (10).

8. Étalon d'étalonnage (60) de la revendication 6 ou 7,
dans lequel le matériau transparent est un saphir transparent.

9. Procédé de fabrication d'un étalon d'étalonnage (60) de matériaux optiques, comprenant les étapes suivantes :
- obtention d'une première couche (10) comprenant ou consistant en un composite verre-céramique ;
- mise en place d'une deuxième couche (20), comprenant ou consistant en un premier milieu absorbant la lumière, au voisinage immédiat d'un premier côté de la première couche (10) ; et
- mise en place d'une troisième couche (30), comprenant ou consistant en un deuxième milieu absorbant la lumière, au voisinage immédiat d'un deuxième côté de la première couche (10),
**caractérisé en ce que** la troisième couche (30) encapsule au moins la première couche (10).

10. Procédé de la revendication 9, comprenant en outre l'étape de :
- réajustement d'un attribut optique de la deuxième couche (20).

11. Procédé de la revendication 9 ou 10, comprenant en outre l'étape de :
- mise en place d'une quatrième couche (40) comprenant ou consistant en un matériau transparent de dureté élevée au voisinage immédiat de la deuxième couche (20).

12. Procédé de l'une quelconque des revendications 9 à 11,
dans lequel le composite verre-céramique est une vitrocéramique d'un système de lithium, silicium et aluminium, LAS, en particulier est une vitrocéramique inorganique non poreuse d'oxyde de lithium-aluminium-silicium.

13. Procédé de l'une quelconque des revendications 9 à 12,
dans lequel le degré d'absorption de lumière de l'absorbeur de la troisième couche (30) est supérieur au degré d'absorption de lumière de la deuxième couche (20), et/ou
dans lequel le deuxième absorbeur de lumière comprend ou consiste en un filtre gris neutre, une peinture absorbant la lumière, et/ou un piège à lumière.

14. Utilisation d'un étalon d'étalonnage de turbidité (60) de matériaux optiques selon l'une quelconque des revendications 1 à 8 comme un matériau étalon pour l'étalonnage de la turbidité et/ou pour l'étalonnage de l'absorption.
